# EUROPÄISCHE PATENTANMELDUNG

(11) **EP 1 793 058 A2**
(43) Veröffentlichungstag der Anmeldung: **06.06.2007**
(21) Anmeldenummer: 06124329.1
(22) Anmeldetag: 17.11.2006
(51) Int. Cl.: E04C 3/09

(54) **Träger für Installationen im Bereich der Haustechnik und der Industrie**

(30) Priorität: 01.12.2005 DE 102005000174
(71) Anmelder: HILTI Aktiengesellschaft, 9494 Schaan (LI)
(72) Erfinder: Hoffmann, Armin, 86899, Landsberg (DE); Hermann, Fritz, 86899, Landsberg (DE); Rubio, Daniel, 28007 Madrid (ES)
(74) Vertreter: Wildi, Roland

(57) **Zusammenfassung**

Ein Träger (11) für Installationen im Bereich der Haustechnik und der Industrie umfasst einen ersten Traggurt (12) und einen parallel in einem Abstand zum ersten Traggurt (12) angeordneten zweiten Traggurt (16). Der erste Traggurt (12) und der zweite Traggurt (16) sind über zwei in deren Längserstreckung wellenförmig verlaufende Stäbe (21) über deren Wendebereiche (22) miteinander verbunden. Der erste Traggurt (12) und der zweite Traggurt (16) sind jeweils von zwei parallel in einem Abstand (A, B) zueinander verlaufenden Längsprofilen (13, 17) gebildet. Die Längsprofile (13, 17) der Traggurte (12, 16) sind über Verbindungsprofile (14, 18) miteinander verbunden. Die Wendebereiche (22) der wellenförmig verlaufenden Stäbe (21) stehen mit den Längsprofilen (13; 17) in Verbindung. Die Längserstreckung der Verbindungsprofile (14; 18) ist schneidend zur Längserstreckung der Längsprofile (13; 17) ausgerichtet und die Verbindungsprofile (14; 18) weisen eine Längserstreckung auf, die grösser als der Abstand (A; B) der Längsprofile (13; 17) zueinander ist.

## Beschreibung

Die Erfindung betrifft einen Träger für Installationen im Bereich der Haustechnik und der Industrie, der im Oberbegriff des Patentanspruchs 1 genannten Art.

Für eine flexible Installation von Leitungen, wie Rohren, Lüftungskanälen, Elektrokabeltrassen und dergleichen, im Bereich der Haustechnik oder der Industrie werden heutzutage oftmals aus Blech gefertigte Montageschienen eingesetzt. Diese Montageschienen weisen beispielsweise einen C-förmigen Querschnitt auf, wobei der offene Bereich der Montageschiene der Befestigung z. B. mittels so genannten Schienenmuttern von Gewindestangen dient, an denen die Leitungen aufgeständert oder abgehängt werden.

Über spezielle Verbindungswinkel sind diese Montageschienen untereinander zu ebenen oder räumlichen Tragkonstruktionen zusammenbaubar. Zudem weisen solche Montageschienen häufig Durchführöffnungen im Bereich des Bodenabschnitts für eine direkte Befestigung der Montageschiene an einer Wand oder Decke beispielsweise mittels eines Dübels auf.

Diese Montageschienen haben sich in der Praxis bewährt, weisen jedoch den Nachteil auf, dass nur auf einer Seite der Montageschiene Anbindemöglichkeiten vorhanden sind. Da es sich bei einer C-förmigen Montageschiene um ein offenes Profil handelt, weist diese zudem im Gegensatz zu einem geschlossenen Profil eine wesentlich schlechtere Torsionssteifigkeit auf.

Es sind deshalb so genannte Doppel-C-Profilschienen bekannt, die beispielsweise aus zwei miteinander vernieteten oder verschweissten C-förmigen Montageschienen gebildet sind und zwei einander gegenüberliegende Anbindemöglichkeiten bieten, so dass eine Rohrleitung ober- und unterhalb der Doppel-C-Profilschiene befestigt werden kann. Wie C-förmige Montageschienen stellen auch die Doppel-C-Profilschienen bezüglich des Tragverhaltens einen Kompromiss zwischen den Möglichkeiten für die Befestigungen und der Steifigkeit des Profils dar. Des Weiteren weisen die Doppel-C-Profilschienen ein verhältnismässig hohes Eigengewicht pro Laufmeter auf, benötigen für die Zahl der Befestigungsmöglichkeiten verhältnismässig viel Material und sind zudem aufwändig in der Herstellung.

Aus der GB 1 358 261 ist ein Träger für Betonschalungen bekannt, der einen ersten Traggurt sowie einen parallel in einem Abstand zum ersten Traggurt angeordneten zweiten Traggurt aufweist, die über zwei in deren Längserstreckung wellenförmig verlaufende Stäbe über deren Wendebereiche miteinander verbunden sind. Dieser Träger weist beispielsweise gegenüber einer C-förmigen Montageschiene oder Doppel-C-Profilschiene ein geringeres Eigengewicht pro Laufmeter auf.

Nachteilig an der bekannten Lösung ist, dass dieser Träger keine Anbindemöglichkeiten zum Abhängen des Trägers oder zum Abhänge und Aufständern von Leitungen aufweist.

Aufgabe der Erfindung ist es, ein Träger mit einer Vielzahl von Anbindemöglichkeiten bei vergleichsweise guten statischen Eigenschaften des Trägers zu schaffen.

Die Aufgabe ist durch die Merkmale des unabhängigen Anspruchs gelöst. Vorteilhafte Weiterbildungen sind in den Unteransprüchen dargelegt.

Gemäss der Erfindung umfasst ein Träger für Installationen im Bereich der Haustechnik und der Industrie einen ersten Traggurt und einen in einem Abstand zum ersten Traggurt angeordneten zweiten Traggurt. Der erste Traggurt und der zweite Traggurt sind über zwei in deren Längserstreckung wellenförmig verlaufende Stäbe über deren Wendebereiche miteinander verbunden. Der erste Traggurt und der zweite Traggurt sind jeweils von zwei parallel in einem Abstand zueinander verlaufenden Längsprofilen gebildet. Die Längsprofile wenigstens eines Traggurtes sind über Verbindungsprofile miteinander verbunden. Die Wendebereiche der wellenförmig verlaufenden Stäbe stehen mit den Längsprofilen in Verbindung. Die Längserstreckung der Verbindungsprofile ist zur Längserstreckung der Längsprofile schneidend ausgerichtet und die Verbindungsprofile weisen eine Längserstreckung auf, die grösser als der Abstand der Längsprofile zueinander ist.

Der Träger weist eine dreidimensionale Fachwerkträgerstruktur mit vorteilhaften statischen Eigenschaften und einem verhältnismässig geringen Eigengewicht pro Laufmeter auf. Zudem bieten die Öffnungen an allen Seiten des Trägers eine Vielzahl von Anbindemöglichkeiten für Gewindestangen, Verbindungselemente und dergleichen, wobei keine speziell ausgebildeten Befestigungsmittel, wie z. B. Schienenmuttern, erforderlich sind.

Der Abstand der den ersten Traggurt oder auch der den zweiten Traggurt ausbildenden Längsprofile zueinander ist derart gewählt, dass zumindest eine Gewindestange oder Befestigungsschraube zwischen diesen hindurchführbar und mittels Kontermuttern, wie z. B. Sechskantmuttern, an dem Träger fixierbar ist. Vorteilhaft werden für die üblichen Typen von Gewindestangen bzw. Befestigungsschrauben, die in der Installation im Bereich der Haustechnik und der Industrie zur Anwendung kommen, Träger mit entsprechenden Abständen der Längsprofile dem Anwender zur Verfügung gestellt. Kommt eine Gewindestange oder Befestigungsschraube zur Anwendung, die eine kleinere Abmessung als der Abstand der Längsprofile aufweist und handelsübliche Kontermuttern ebenfalls eine kleinere Abmessung als dieser Abstand der Längsprofile aufweisen, kann zur Überbrückung der Abmessungsdifferenzen eine entsprechende Abmessungen aufweisende Unterlegscheibe oder ein entsprechend ausgebildeter Anschlag mit einer Durchführöffnung vorgesehen werden.

Die offene, von allen Seiten zugängliche Fachwerkträgerstruktur des Trägers ermöglicht ein Verspannen der Kontermuttern von allen Seiten und auch innerhalb des Trägers. Dabei kann nur der erste Traggurt oder nur der zweite Traggurt des Trägers für die Anbindung verwendet werden. Beispielsweise werden für schwere Leitungen oder zum Abhängen des Trägers von einer Decke vorteilhaft der erste Traggurt und der zweite Traggurt verwendet, wobei eine Gewindestange durch den gesamten Träger hindurchgeführt und mit Kontermuttern an der Ober- und Unterseite an dem Träger verspannt wird. Leichte Leitungen, wie beispielsweise Elektrokabel oder Schläuche, sind einfach mit so genannten Kabelbindern an dem Träger befestigbar.

Des Weiteren ermöglicht die offene, von allen Seiten zugängliche Fachwerkträgerstruktur des Trägers auch die Durchführung von Installationen, wie z. B. Rohrleitungen zwischen den ersten und zweiten Traggurten, womit die Installationen platzsparend direkt unter der Decke befestigbar sind. Die Installationen, wie Rohrleitungen, werden beispielsweise auf einem der Traggurte aufgeständert. Der Träger nutzt die maximal zur Verfügung stehende Höhe und hat daher bei einem gegenüber einer C-förmigen Montageschiene vergleichbaren Materialbedarf eine mehrfach höhere Biegesteifigkeit.

Die Längsprofile bilden in einer quer zu deren Längserstreckung verlaufenden Ebene Eckpunkte eines Vierecks aus, wobei der Träger in dieser Ebene beispielsweise eine V-förmige Querschnittsform aufweist. Bei einer derartigen Ausführungsform bildet beispielsweise der Traggurt mit dem grösseren Abstand der Längsprofile zueinander die Befestigungsebene zur Festlegung des Trägers an einem Bauteil, wie z. B. an einer Decke.

Der Öffnungswinkel des V-förmigen Querschnitts beträgt vorteilhaft 10° bis 50° und wird derart gewählt, dass beispielsweise Rohrschellen innerhalb des Trägers montiert werden können.

Die wellenförmig verlaufenden Stäbe sind im Bereich ihrer Wendebereiche vorteilhaft mit den, den ersten Traggurt und den zweiten Traggurt ausbildenden Längsprofilen verschweisst. Gleichzeitig gewährleisten die wellenförmig verlaufenden Stäbe einen konstanten Abstand des ersten Traggurtes zu dem zweiten Traggurt über die gesamte Längserstreckung des Trägers. Die wellenförmig verlaufenden Stäbe werden vorteilhafterweise aus einem geraden Profilstück in die wellenförmige Ausgestaltung gebogen. Vorteilhaft schliessen die benachbarten Abschnitte der wellenförmig verlaufenden Stäbe einen Winkel im Bereich von 50° bis 90° ein, womit ein Träger mit vorteilhaften statischen Eigenschaften geschaffen wird.

Neben einem kontinuierlichen Verlauf der wellenförmigen Ausgestaltung kann diese auch durch eine trapezförmige Ausgestaltung die Wellenform ausbilden. Dabei sind die wellenförmig verlaufenden Stäbe in eine Form gebogen, die aneinandergereihten Trapeze entsprechen. Vorteilhaft schliessen die benachbarten Abschnitte der aneinandergereihten Trapeze einen Winkel im Bereich von 15° bis 35° ein, womit ein Träger mit vorteilhaften statischen Eigenschaften geschaffen wird. Eine weitere wellenförmige Ausgestaltung stellen im Sinne der Erfindung auch im Zickzack verlaufende Stäbe dar.

In einer Ausführungsform des Trägers sind die wellenförmig verlaufenden Stäbe innenseitig der Längsprofile mit diesen verbunden, was eine einfache Fertigung eines Trägers mit einer V-förmigen Querschnittsform ermöglicht. Die Wendebereiche der wellenförmig verlaufenden Stäbe im Bereich der Längsprofile, die nah beieinander angeordnet sind, sind vorteilhaft einerseits mit diesen Längsprofilen und andererseits zur Ausbildung des gewünschten Abstandes zwischen diesen miteinander verbunden beispielsweise miteinander verschweisst.

Alternativ dazu sind die wellenförmig verlaufenden Stäbe aussenseitig der Längsprofile mit diesen verbunden, was eine einfache Fertigung des Trägers ermöglicht. Zudem steht bei dieser Ausführungsform des Trägers der gesamte von den Längsprofilen in der quer zu deren Längserstreckung verlaufenden Ebene aufgespannte Raum für Sicherungsmittel zur Verfügung, ohne dass die wellenförmig verlaufenden Stäbe diesen einengen.

Die Verbindungsprofile sind in einem Winkel zur Längserstreckung der Längsprofile an zumindest einem der Traggurte angeordnet, so dass die Längserstreckung der Verbindungsprofile zur Längserstreckung der Längsprofile schneidend ausgerichtet ist. Die Verbindungsprofile weisen eine Längserstreckung auf, die grösser als der Abstand der Längsprofile zueinander ist, so dass die Verbindungsprofile sich mit den Längsprofilen kreuzen und somit eine ausreichend grosse Kontaktfläche zwischen den Verbindungsprofilen und den Längsprofilen zur Schaffung einer sicheren Verbindung zwischen diesen vorhanden ist. Desto flacher der von der Längserstreckung der Verbindungsprofile und der Längserstreckung der Längsprofile eingeschlossene Winkel ist, desto länger muss die Längserstreckung der Verbindungsprofile sein.

Vorzugsweise sind die Längsprofile des ersten Traggurtes und die Längsprofile des zweiten Traggurtes jeweils über Verbindungsprofile miteinander verbunden, wodurch ein stabiler Träger geschaffen wird, bei dem die Längsprofile des ersten und des zweiten Traggurts einerseits über die wellenförmig verlaufenden Stäbe und andererseits jeweils über die Verbindungsprofile fixiert sind.

Bevorzugt sind die Verbindungsprofile senkrecht zur Längserstreckung der Längsprofile ausgerichtet, so dass zwischen diesen ein ausreichender Freiraum zur Anbindung von Gewindestangen, Verbindungselemente und dergleichen vorhanden ist. Zudem bleibt ein solcher Träger auch nach dem Ablängen auf eine gewünschte Länge weiterhin stabil.

Vorzugsweise bilden die Längsprofile in einer quer zu deren Längserstreckung verlaufenden Ebene Eckpunkte eines Rechtecks. Der Träger kann in verschiedenen Ausrichtungen angeordnet werden und bietet dabei weiterhin eine Vielzahl von Anbindemöglichkeiten. In dieser vorteilhaften Ausführungsform des Trägers können zudem beim ersten Traggurt und beim zweiten Traggurt die gleichen Sicherungsmittel, wie z. B. Kontermuttern, zur Sicherung einer durch den Träger durchgeführten Gewindestangen oder Befestigungsschrauben verwendet werden. Der Träger kann neben einem rechteckigen Querschnitt mit zwei unterschiedlich ausgebildeten Querabmessungen, wie mit einer zur Höhe unterschiedlichen Breite, alternativ auch einen quadratischen Querschnitt aufweisen.

Mit einer einfachen Verbindungseinrichtung, z. B. eine Kombination aus Winkeln und Befestigungsschrauben, lassen sich mehrere Träger mit einem rechteckigen Querschnitt leicht zu ebenen und räumlichen Tragkonstruktionen verbinden. Die Verbindungseinrichtung umfasst als Anbindeelement beispielsweise einen L-förmigen Winkel mit in einem Winkel zueinander ausgerichteten Schenkeln oder einen mehrfach abgewinkelten Winkel mit mehr als zwei Schenkeln. Vorteilhaft weist der Winkel in allen Schenkeln jeweils eine Durchführöffnung für Befestigungsschrauben auf. Besonders vorteilhaft sind die Durchführöffnungen als Vierkantloch ausgebildet, in denen z. B. eine Flachrundschraube mit einem Vierkantansatz nach dem Hindurchführen derselben drehgesichert gehalten wird und somit eine einfache Montage der Verbindungseinrichtung ermöglicht.

Bevorzugt sind die Verbindungsprofile an den einander jeweils zugewandten Seiten der jeweils den ersten Traggurt ausbildenden Längsprofile und der jeweils den zweiten Traggurt ausbildenden Längsprofile festgelegt, womit zwischen den, den ersten Traggurt ausbildenden Längsprofilen beziehungsweise zwischen den, den zweiten Traggurt ausbildenden Längsprofilen ein Aufnahmeraum beispielsweise für einen Führungsabschnitt eines Anbindeelementes geschaffen wird. Das Anbindeelement zum Verbinden zweier Träger ist beispielsweise ein mit Sicken versehener L-förmiger Winkel, wobei der Sickenboden bei Anlage des Winkels an dem Träger in den Aufnahmeraum eindringt. Die Sicken in dem Winkel dienen einerseits als Führungsmittel sowie Verdrehsicherung an dem Träger und andererseits wird der Winkel durch die Sicken bezüglich der Festigkeitseigenschaften verbessert. Der Aufnahmeraum kann gleichzeitig der Aufnahme eines Vierkantansatzes einer Flachrundschraube dienen, womit die montierte Flachrundschraube beim Verspannen derselben drehgesichert gehalten wird.

Vorzugsweise ist bei jedem Verbindungsbereich der Wendebereiche der wellenförmig verlaufenden Stäbe mit den, den ersten Traggurt ausbildenden Längsprofilen und/oder den, den zweiten Traggurt ausbildenden Längsprofilen jeweils ein Verbindungsprofil festgelegt, z. B. mit den Längsprofilen verschweisst. Dadurch wird der gesamte Träger ausgesteift und die auf den Träger wirkenden Kräfte sind gut ableitbar.

Bevorzugt fluchten die wellenförmig verlaufenden Stäbe in einer quer zur Längserstreckung der Längsprofile verlaufenden Richtung, so dass auch an den Seiten des Trägers, zwischen dem ersten Traggurt und dem zweiten Traggurt eine Vielzahl von Anbindemöglichkeiten gegeben ist. Diese Anordnung der wellenförmig verlaufenden Stäbe ist besonders vorteilhaft, wenn zwischen dem ersten Traggurt und dem zweiten Traggurt eine Installation, wie eine Rohrleitung hindurchführbar sein soll.

Vorzugsweise bilden die wellenförmig verlaufenden Stäbe Befestigungsbereiche für den Träger aus, wobei die Befestigungsbereiche durch die Längsprofile überlappende Wendebereiche gebildet sind, die parallel zu einer von den Längsprofilen eines der Traggurte aufgespannten Ebene verlaufend ausgerichtet sind. Bei wellenförmig verlaufenden Stäben, die innenseitig an den Längsprofilen festgelegt sind, werden die Wendebereiche beispielsweise nach aussen gebogen und bilden eine Durchführöffnung für ein Befestigungsmittel zur Festlegung des Trägers an einem Bauteil aus. Für die Befestigung wird als Befestigungsmittel beispielsweise ein Dübel mit einer Unterlegscheibe verwendet, die beim Verspannen einerseits mit dem wellenförmig verlaufenden Stab im Bereich der Befestigungsbereiche und andererseits mit einem der Längsprofile in Anlage kommt, wobei der Schweisspunkt zwischen dem wellenförmig verlaufenden Stab und dem entsprechenden Längsprofil entlastet wird. Bei wellenförmig verlaufenden Stäben, die aussenseitig an den Längsprofilen festgelegt sind, werden die Wendebereiche beispielsweise nach innen gebogen und bilden so eine Durchführöffnung für ein Befestigungsmittel zur Festlegung des Trägers an einem Bauteil aus. Bei wellenförmig verlaufenden Stäben, welche die Form von aneinandergereihten Trapezen aufweisen, können die entlang der Längserstreckung des entsprechenden Längsprofils verlaufenden Wendebereiche den Befestigungsbereich für den Träger ausbilden, wobei dadurch Befestigungslaschen in Form von Langlöchern geschaffen werden, was die Flexibilität der Befestigungsmöglichkeiten wesentlich verbessert.

Bevorzugt weist zumindest eines der Längsprofile einen runden Querschnitt auf. Besonders vorteilhaft weisen alle Längsprofile einen runden Querschnitt auf. Ein solcher Träger ist einfach zu fertigen und ermöglicht eine Vielzahl von Ausgestaltungen um einen grossen Bereich von statischen Anforderungen an den Träger abdecken zu können.

Vorzugsweise weist zumindest eines der Verbindungsprofile und/oder zumindest einer der wellenförmig verlaufenden Stäbe einen runden Querschnitt auf. Besonders vorteilhaft weisen alle Verbindungsprofile und/oder wellenförmig verlaufenden Stäbe einen runden Querschnitt auf. Ein solcher Träger ist einfach zu fertigen und ermöglicht eine Vielzahl von Ausgestaltungen um einen grossen Bereich von statischen Anforderungen an den Träger abdecken zu können.

In einer vorteilhaften Ausführungsform der Erfindung weisen die Längsprofile, die Verbindungsprofile sowie die wellenförmig verlaufenden Stäbe jeweils einen runden Querschnitt auf. In einer alternativen Ausführung können auch einzelne Profile einen unrunden Querschnitt aufweisen, wobei z. B. auch eine Kombination von Längsprofilen mit einem polygonalen, wie z. B. einem rechteckigen, Querschnitt und mit einem runden Querschnitt zur Bildung des ersten Traggurtes und/oder des zweiten Traggurtes möglich sind.

Vorzugsweise liegt das Verhältnis der Querschnittsabmessungen der Längsprofile zu den Querschnittsabmessungen der wellenförmig verlaufenden Stäbe im Bereich von 1.1:1 bis 3:1, womit ein Träger mit vorteilhaften statischen Eigenschaften bei einem geringen Eigengewicht pro Laufmeter geschaffen wird.

Bevorzugt liegt das Verhältnis der Querschnittsabmessungen der Längsprofile zu den Querschnittsabmessungen der Verbindungsprofile im Bereich von 1:1.1 bis 1:3.0, womit ein Träger mit vorteilhaften statischen Eigenschaften bei einem geringen Eigengewicht pro Laufmeter geschaffen wird.

Die Längsprofile, die Verbindungsprofile und/oder die wellenförmig verlaufenden Stäbe sind vorteilhaft aus einem Draht gebildet. Für eine einfache Fertigung des Trägers werden vorteilhaft für die wellenförmig verlaufenden Stäbe und die Verbindungsprofile Profile oder Drähte mit den gleichen Querschnittsabmessungen und/oder mit der gleichen Querschnittsausgestaltung verwendet.

Anstelle von geschweissten Verbindungen können die Längsprofile, die Verbindungsprofile und die wellenförmig verlaufenden Stäbe auch miteinander verlötet oder verklebt sein.

Als Ausgangsmaterial für die Profile oder die Drähte wird vorteilhaft Metall verwendet. In Abhängigkeit von dem Ort der Anwendung kommt beispielsweise ein rostfreier Stahl oder Aluminium als Ausgangsmaterial für die Profile oder die Drähte zur Anwendung. Alternativ können auch Profile oder Drähte aus einem Kunststoff oder aus einem Kohlenstofffaserverstärkten Kunststoff zur Herstellung des Trägers verwendet werden.

Die Erfindung wird nachstehend anhand zweier Ausführungsbeispiele näher erläutert. Es zeigen:
- Fig. 1: Eine Seitenansicht eines ersten Ausführungsbeispiels des erfindungsgemässen Trägers;
- Fig. 2: einen Schnitt entlang der Linie II-II in Fig. 1;
- Fig. 3: die in Fig. 1 gezeigte Seitenansicht mit Anbindeteilen;
- Fig. 4: einen Schnitt entlang der Linie IV-IV in Fig. 3;
- Fig. 5: einen Schnitt entlang der Linie V-V in Fig. 3;
- Fig. 6: eine Seitenansicht auf einen Verbindungspunkt zweier erfindungsgemässer Träger;
- Fig. 7: einen Schnitt entlang der Linie VII-VII in Fig. 6;
- Fig. 8: eine Seitenansicht eines zweiten Ausführungsbeispiels des erfindungsgemässen Trägers;
- Fig. 9: einen Schnitt entlang der Linie IX-IX in Fig. 8; und
- Fig. 10: eine Ansicht entlang der Linie X-X in Fig. 9.

Grundsätzlich sind in den Figuren gleiche Teile mit den gleichen Bezugszeichen versehen.

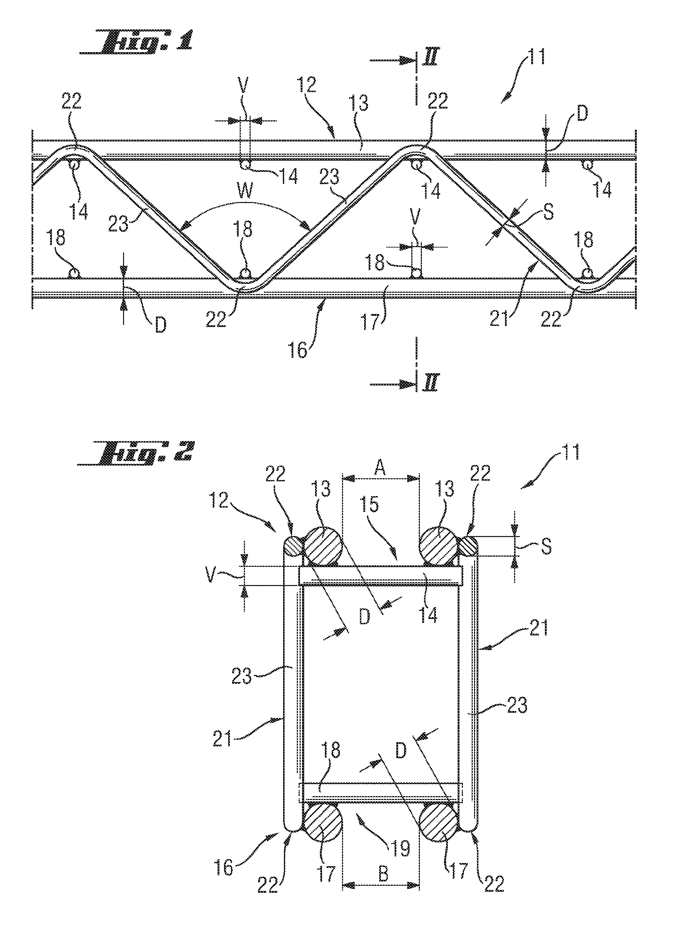

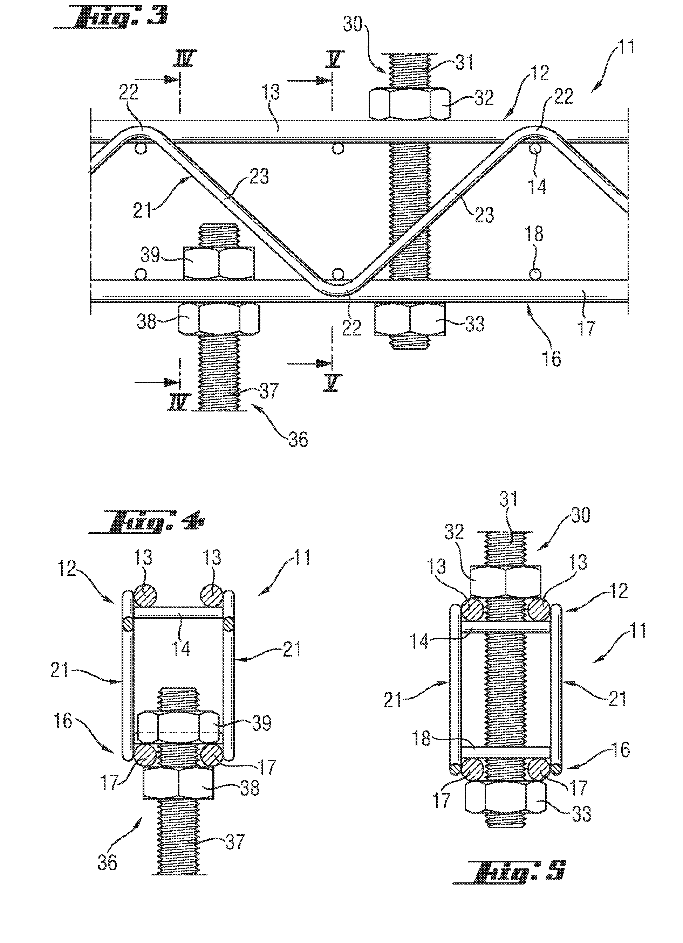

Der in den Figuren 1 und 2 dargestellte Träger 11 für Installationen im Bereich der Haustechnik und der Industrie, als erstes Ausführungsbeispiel der Erfindung, umfasst einen ersten Traggurt 12 und einen parallel in einem Abstand zum ersten Traggurt 12 angeordneten zweiten Traggurt 16. Der erste Traggurt 12 und der zweite Traggurt 16 sind über zwei in deren Längserstreckung wellenförmig verlaufende Stäbe 21 über deren Wendebereiche 22 miteinander verbunden. Die benachbarten Abschnitte 23 der wellenförmig verlaufenden Stäbe 21 schliessen einen Winkel W von etwa 70°ein.

Der erste Traggurt 12 ist von zwei parallel in einem Abstand A zueinander verlaufenden Längsprofilen 13 und diese verbindende Verbindungsprofile 14 gebildet, wobei die Längserstreckung der Verbindungsprofile 14 zur Längserstreckung der Längsprofile 13 schneidend ausgerichtet ist. Die Verbindungsprofile 14 sind senkrecht zur Längserstreckung der Längsprofile 13 ausgerichtet und weisen eine Längserstreckung auf, die grösser als der Abstand A der Längsprofile 13 zueinander ist. Die Längsprofile 13 sowie die Verbindungsprofile 14 sind aus einem Draht gebildet und weisen jeweils einen runden Querschnitt auf. Die Längserstreckung der Verbindungsprofile 14 ist etwa um die beiden, senkrecht zur Längserstreckung der Längsprofile 13 gemessenen Durchmesser D der Längsprofile 13 grösser als deren Abstand A zueinander. Auch die wellenförmig verlaufenden Stäbe 21 sind aus einem Draht gebildet und weisen jeweils einen runden Querschnitt auf.

Der zweite Traggurt 16 ist von zwei parallel in einem Abstand B zueinander verlaufenden Längsprofilen 17 und diese verbindende Verbindungsprofile 18 gebildet, wobei die Verbindungsprofile 18 senkrecht zur Längserstreckung der Längsprofile 17 ausgerichtet sind und eine Längserstreckung aufweisen, die grösser als der Abstand B der Längsprofile 17 zueinander ist. Die Längsprofile 17 sowie die Verbindungsprofile 18 sind aus einem Draht gebildet und weisen jeweils einen runden Querschnitt auf. Die Längserstreckung der Verbindungsprofile 18 ist etwa um die beiden, senkrecht zur Längserstreckung der Längsprofile 17 gemessenen Durchmesser D der Längsprofile 17 grösser als deren Abstand B zueinander.

Die Längsprofile 13 bzw. 17 bilden in einer quer zu deren Längserstreckung verlaufenden Ebene Eckpunkte eines Rechtecks (siehe Fig. 2). Der Abstand A der Längsprofile 13 des ersten Traggurtes 12 und der Abstand B der Längsprofile 17 des zweiten Traggurtes 16 sind in diesem Ausführungsbeispiel gleich gross. Die wellenförmig verlaufenden Stäbe 21 fluchten in einer quer zur Längserstreckung der Längsprofile 13 bzw. 17 verlaufenden Richtung und sind aussenseitig der Längsprofile 13 bzw. 17 mit diesen verbunden.

Die Verbindungsprofile 14 des ersten Traggurtes 12 sind zur Schaffung eines Aufnahmeraums 15 an der Seite der jeweils den ersten Traggurt 12 ausbildenden Längsprofile 13 mittels Schweisspunkten festgelegt, die der den zweiten Traggurt 16 ausbildenden Längsprofile 17 zugewandt ist. Die Verbindungsprofile 18 des zweiten Traggurtes 16 sind zur Schaffung eines Aufnahmeraums 19 an der Seite der jeweils den zweiten Traggurt 16 ausbildenden Längsprofile 17 mittels Schweisspunkten festgelegt, die der den ersten Traggurt 12 ausbildenden Längsprofile 13 zugewandt ist.

Bei jedem Verbindungsbereich der Wendebereiche 22 der wellenförmig verlaufenden Stäbe 21 mit den, den ersten Traggurt 12 ausbildenden Längsprofilen 13 und den, den zweiten Traggurt 16 ausbildenden Längsprofilen 17 ist jeweils ein Verbindungsprofil 14 bzw. 18 mittels Schweisspunkten festgelegt. Zwischen den Wendebereichen 22 der wellenförmig verlaufenden Stäbe 21 sind zusätzliche Verbindungsprofile 14 an den, den ersten Traggurt 12 ausbildenden Längsprofilen 13 und Verbindungsprofile 18 an den, den zweiten Traggurt 16 ausbildenden Längsprofilen 17 vorgesehen.

Das Verhältnis des Durchmessers D der Längsprofile 13 bzw. 17 zu dem Durchmesser S der wellenförmig verlaufenden Stäbe 21 beträgt 2:1. Das Verhältnis des Durchmessers D der Längsprofile 13 bzw. 17 zu dem Durchmesser V der Verbindungsprofile 14 bzw. 18 beträgt in diesem Ausführungsbeispiel ebenfalls 2:1.

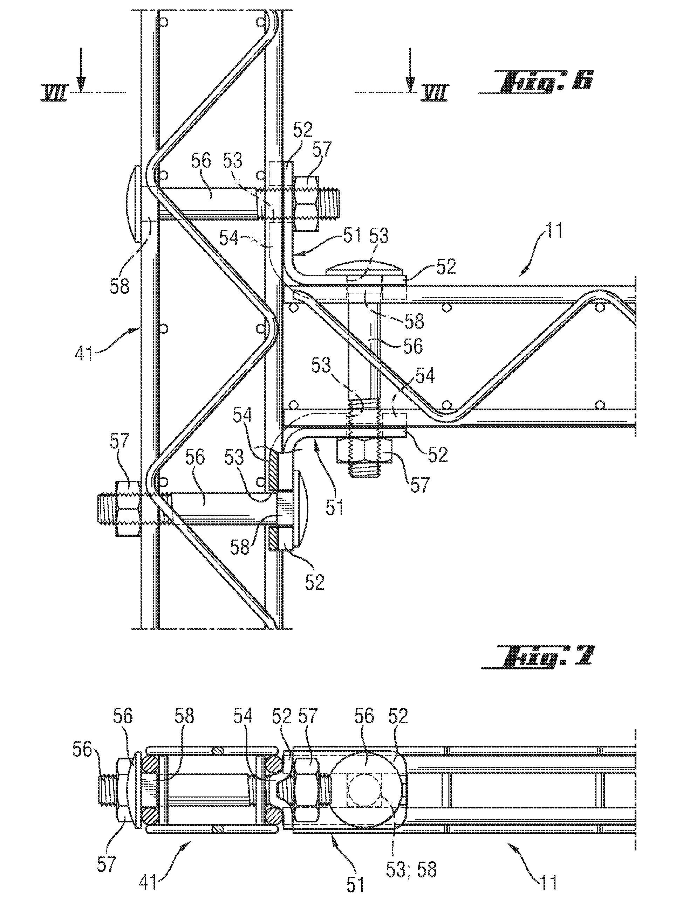

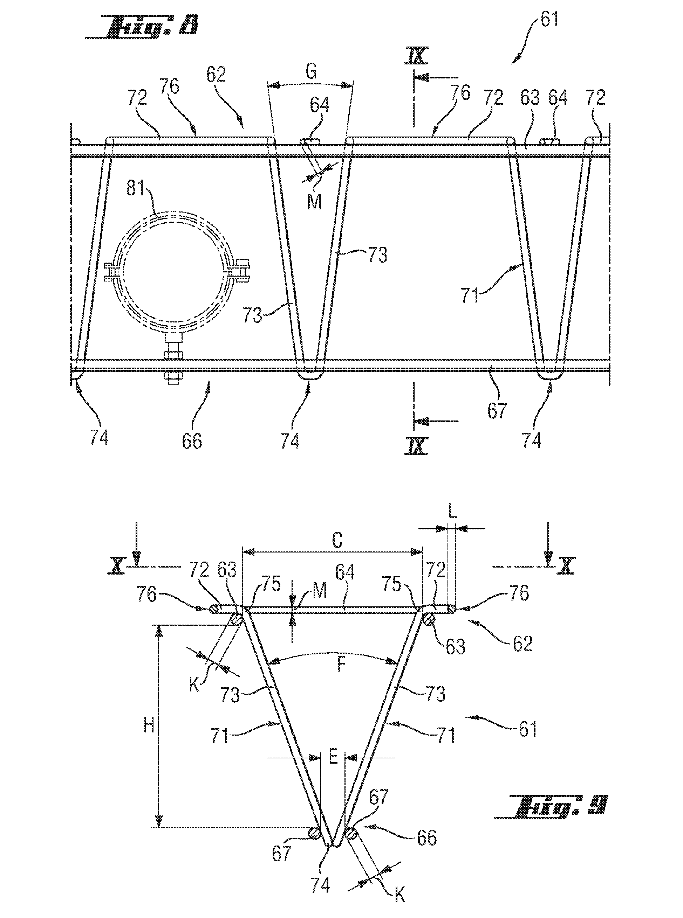

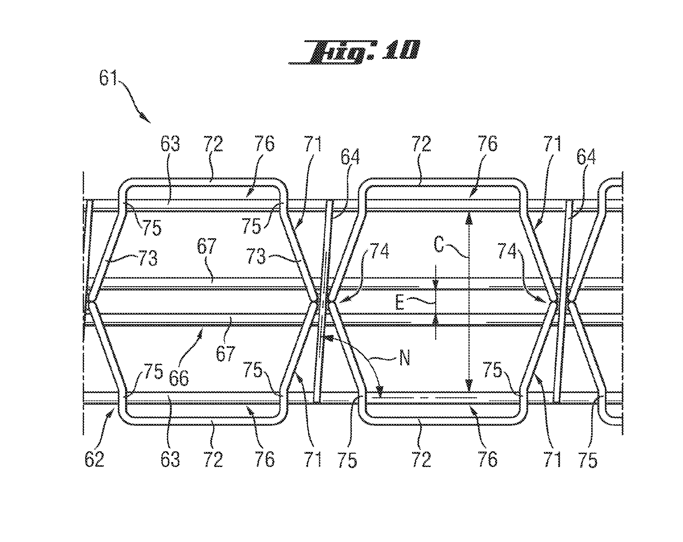

Nachfolgend sind in den Figuren 3 bis 5 zwei Beispiele für mögliche Anbindungen an dem Träger 11 dargestellt.

Für eine Abhängung 30 des Trägers 11 an einer Decke (hier nicht dargestellt) wird eine an der Decke beispielsweise mittels eines Dübels festgelegte M10-Gewindestange 31 zwischen den, den ersten Traggurt 12 ausbildenden Längsprofilen 13 und den, den zweiten Traggurt 16 ausbildenden Längsprofilen 17 hindurchgeführt und mittels zwei Kontermuttern 32 und 33 gesichert. Mittels der Kontermuttern 32 und 33 lässt sich der Träger 11 einfach in der Höhe justieren.

Für eine Abhängung 36 einer Rohrleitung (hier nicht dargestellt) an dem Träger 11 wird eine M10-Gewindestange 37 zwischen den, den zweiten Traggurt 16 ausbildenden den Längsprofilen 17 hindurchgeführt und mittels zwei Kontermuttern 38 und 39 gesichert. Durch die offene, von allen Seiten zugängliche Fachwerkträgerstruktur des Trägers 11 ist die Kontermutter 39 innerhalb des Trägers 11 einfach mit einem Verspannwerkzeug kuppelbar. Mittels der Kontermuttern 38 und 39 lässt sich die abgehängte Rohrleitung einfach in der Höhe justieren.

In der Figur 6 und 7 ist ein Verbindungsknoten zum Verbinden eines horizontal ausgerichteten Trägers 11 mit einem vertikal ausgerichteten Träger 41 dargestellt. Der Träger 41 ist analog des Trägers 11 ausgebildet. Mittels zwei L-förmiger Winkel 51 und drei Flachrundschrauben 56 mit Vierkantansatz 58, an denen jeweils eine Sechskantmutter als Kontermutter 57 angeordnet ist, wird der Träger 11 an dem Träger 41 fixiert.

Jeder Winkel 51 weist zwei, senkrecht zueinander ausgerichtete Schenkel 52 auf, wobei jeder Schenkel 52 eine Sicke 54 und eine Vierkant-Durchführöffnung 53 aufweist. Die Sicken 54 sind derart ausgebildet, dass diese bei Anlage des Winkels 51 an dem Träger 11 bzw. 41 in den Aufnahmeraum zwischen den, den ersten Traggurt oder den zweiten Traggurt ausbildenden Längsprofilen zu liegen kommt. Der Vierkantansatz 58 an den Flachrundschrauben 56 ist derart gewählt, dass dieser in den Aufnahmeraum zwischen den Längsprofilen eindringen kann. Die Flachrundschraube 56 kann beispielsweise zuerst durch den Winkel 52 und anschliessend durch den Träger 11 bzw. 41 geführt werden, wobei der Vierkantansatz 58 an der Flachrundschraube 56 mit der Vierkant-Durchführöffnung 53 des Winkels 52 in Eingriff kommt, so dass die Flachrundschraube 56 drehgesichert gehalten ist. Alternativ kann die Flachrundschraube 56 zuerst durch den Träger 11 bzw. 41 und anschliessend durch den Winkel 52 geführt werden, wobei der Vierkantansatz 58 an der Flachrundschraube 56 zwischen den Längsprofilen des Trägers 11 bzw. 41 zu liegen kommt, wobei die Flachrundschraube 56 ebenfalls drehgesichert gehalten wird.

In den Fig. 8, 9 und 10 ist ein zweites Ausführungsbeispiel eines erfindungsgemässen Trägers 61 dargestellt, der einen ersten Traggurt 62 und einen in einem Abstand zum ersten Traggurt 62 angeordneten zweiten Traggurt 66 umfasst, die über zwei in deren Längserstreckung wellenförmig verlaufende Stäbe 71 über deren Wendebereiche 72 und 74 miteinander verbunden sind. Der erste Traggurt 62 ist von zwei parallel in einem Abstand C zueinander verlaufenden Längsprofile 63 und diese verbindende Verbindungsprofile 64 gebildet, wobei die Längserstreckung der Verbindungsprofile 64 zur Längserstreckung der Längsprofile 63 schneidend ausgerichtet ist. Die Längserstreckung der Verbindungsprofile 64 und die Längserstreckung der Längsprofile 63 schliessen einen Winkel N von weniger als 90° ein. Die Längserstreckung der Verbindungsprofile 64 ist derart gewählt, dass diese mit den Längsprofilen 63 verschweissbar sind. Der zweite Traggurt 66 ist von zwei parallel in einem Abstand E zueinander verlaufenden Längsprofilen 67 gebildet. Der Träger 61 weist in der Ebene senkrecht zur Längserstreckung der Längsprofile 63 und 67 einen V-förmigen Querschnitt auf. Die wellenförmig verlaufenden Stäbe 71 schliessen in diesem Querschnitt einen Winkel F von 40°ein.

Die wellenförmig verlaufenden Stäbe 71 sind aus einem Draht mit einem runden Querschnitt gefertigt und weisen in einer Seitenansicht mehrere aneinandergereihte Trapeze auf. Der Winkel G zwischen zwei benachbarten Abschnitten 73 der wellenförmig verlaufenden Stäbe 71 beträgt 15°.

Die wellenförmig verlaufenden Stäbe 71 fluchten in einer quer zur Längserstreckung der Längsprofile 63 bzw. 67 verlaufenden Richtung und sind innenseitig, d. h. an den einander zugewandten Seiten der Längsprofile 63 und an den einander zugewandten Seiten der Längsprofile 67, mit den Längsprofilen 63 bzw. 67 schweisstechnisch verbunden. Im Wendebereich 74 sind die wellenförmig verlaufenden Stäbe 71 zusätzlich miteinander verschweisst und schaffen den gewünschten Abstand E zwischen den Längsprofilen 67 des zweiten Traggurtes 66.

Die wellenförmig verlaufenden Stäbe 71 bilden des Weiteren Befestigungsbereiche 76 für den Träger 61 aus, wobei die Befestigungsbereiche 76 durch die Wendebereiche 72 gebildet sind, welche die Längsprofile 63 nach aussen hin überlappen. Die Befestigungsbereiche 76 sind parallel zu einer von den Längsprofilen 63 des Traggurtes 62 aufgespannten Ebene verlaufend ausgerichtet. Die Befestigungsbereiche 76 bilden Langlöcher aus, durch die ein Befestigungsmittel hindurchführbar ist. Die wellenförmig verlaufenden Stäbe 71 sind jeweils im Abwinklungsbereich 75, der an den Längsprofilen 63 anliegt, mit diesen verbunden.

Die Längsprofile 63 und 67 sowie die Verbindungsprofile 64 weisen einen runden Querschnitt auf. Das Verhältnis des Durchmessers K der Längsprofile 63 bzw. 67 zu dem Durchmesser L der wellenförmig verlaufenden Stäbe 71 beträgt 1.5:1. Das Verhältnis des Durchmessers K der Längsprofile 63 zu dem Durchmesser M der Verbindungsprofile 64 beträgt in diesem Ausführungsbeispiel 2:1.

Der Abstand H zwischen dem ersten Traggurt 62 und dem zweiten Traggurt 66 ist derart gewählt, dass eine Installation zwischen diesen hindurchgeführt werden kann. In Fig. 8 ist gestrichelt eine Rohrschelle 81 angedeutet, die zum Aufständern der hindurchzuführenden Leitung an dem zweiten Traggurt 66 festlegbar ist. Der Abstand E der Längsprofile 67 des zweiten Traggurts 66 ist derart gewählt, dass eine Gewindestange zwischen diesen hindurchführbar und mittels Kontermuttern an dem zweiten Traggurt 66 festlegbar ist.

## Patentansprüche

1. Träger für Installationen im Bereich der Haustechnik und der Industrie mit einem ersten Traggurt (12; 62) und mit einem in einem Abstand zum ersten Traggurt (12; 62) angeordneten zweiten Traggurt (16; 66), die über zwei in deren Längserstreckung wellenförmig verlaufende Stäbe (21; 71) über deren Wendebereiche (22; 72, 74) miteinander verbunden sind, **dadurch gekennzeichnet, dass** der erste Traggurt (12; 62) und der zweite Traggurt (16; 66) jeweils von zwei parallel in einem Abstand (A, B; C, E) zueinander verlaufenden Längsprofilen (13, 17; 63, 67) gebildet sind, wobei die Längsprofile (13, 17; 63) wenigstens eines Traggurtes (12, 16; 62) über Verbindungsprofile (14, 18; 64) miteinander verbunden sind, die Wendebereiche (22; 72, 74) der wellenförmig verlaufenden Stäbe (21; 71) mit den Längsprofilen (13,; 17; 63, 67) in Verbindung stehen, die Längserstreckung der Verbindungsprofile (14, 18; 64) zur Längserstreckung der Längsprofile (13, 17; 63) schneidend ausgerichtet ist und die Verbindungsprofile (14, 18; 64) eine Längserstreckung aufweisen, die grösser als der Abstand (A, B; C) der Längsprofile (13, 17; 63) zueinander ist.

2. Träger nach Anspruch 1, **dadurch gekennzeichnet, dass** die Längsprofile (13) des ersten Traggurtes (12) und die Längsprofile (17) des zweiten Traggurtes (17) jeweils über Verbindungsprofile (14, 18) miteinander verbunden sind.

3. Träger nach Anspruch 1 oder 2, **dadurch gekennzeichnet, dass** die Verbindungsprofile (14 18) senkrecht zur Längserstreckung der Längsprofile (13, 17) ausgerichtet sind.

4. Träger nach einem der Ansprüche 1 bis 3, **dadurch gekennzeichnet, dass** die Längsprofile (13, 17) in einer quer zu deren Längserstreckung verlaufenden Ebene Eckpunkte eines Rechtecks bilden.

5. Träger nach einem der Ansprüche 2 bis 4, **dadurch gekennzeichnet, dass** die Verbindungsprofile (14, 18) an den einander jeweils zugewandten Seiten der jeweils den ersten Traggurt (12) ausbildenden Längsprofile (13) und der jeweils den zweiten Traggurt (16) ausbildenden Längsprofile (17) festgelegt sind.

6. Träger nach einem der Ansprüche 1 bis 5, **dadurch gekennzeichnet, dass** bei jedem Verbindungsbereich der Wendebereiche (22) der wellenförmig verlaufenden Stäbe (21) mit den, den ersten Traggurt (12) ausbildenden Längsprofilen (13) und/oder den, den zweiten Traggurt (16) ausbildenden Längsprofilen (17) jeweils ein Verbindungsprofil (14; 18) festgelegt ist.

7. Träger nach einem der Ansprüche 1 bis 6, **dadurch gekennzeichnet, dass** die wellenförmig verlaufenden Stäbe (21; 71) in einer quer zur Längserstreckung der Längsprofile (13, 17; 63, 67) verlaufenden Richtung fluchten.

8. Träger nach einem der Ansprüche 1 bis 7 **dadurch gekennzeichnet, dass** die wellenförmig verlaufenden Stäbe (71) Befestigungsbereiche (76) für den Träger (61) ausbilden, wobei die Befestigungsbereiche (61) durch die Längsprofile (63) überlappende Wendebereiche (72) gebildet sind, die parallel zu einer von den Längsprofilen (63) eines der Traggurte (62) aufgespannten Ebene verlaufend ausgerichtet sind.

9. Träger nach einem der Ansprüche 1 bis 8 **dadurch gekennzeichnet, dass** zumindest eines der Längsprofile (13, 17; 63, 67), der Verbindungsprofile (14, 18; 64) und/oder der wellenförmig verlaufenden Stäbe (21; 71) einen runden Querschnitt aufweist.

10. Träger nach einem der Ansprüche 1 bis 9, **dadurch gekennzeichnet, dass** das Verhältnis der Querschnittsabmessungen (D) der Längsprofile (13, 17; 63, 67) zu den Querschnittsabmessungen (S) der wellenförmig verlaufenden Stäbe (21; 71) im Bereich von 1.1:1 bis 3:1 liegt.

11. Träger nach einem der Ansprüche 1 bis 10, **dadurch gekennzeichnet, dass** das Verhältnis der Querschnittsabmessungen (D) der Längsprofile (13, 17; 63, 67) zu den Querschnittsabmessungen (V) der Verbindungsprofile (14, 18; 64) im Bereich von 1.1:1 bis 3:1 liegt.
